# EUROPEAN PATENT APPLICATION

(11) **EP 4 086 098 A1**
(43) Date of publication of application: **09.11.2022**
(21) Application number: 22171081.7
(22) Date of filing: 02.05.2022
(51) Int. Cl.: B60K 5/08, B60K 17/02, B60K 17/28

(54) **A SELF-PROPELLED VEHICLE AND METHOD FOR CROSSING LAND AT A BROAD SPEED RANGE**

(30) Priority: 03.05.2021 NL 2028129
(71) Applicant: Geurts Investment, 5807 EE Oostrum (NL)
(72) Inventor: GEURTS, Elian E., 5807 EE Oostrum (NL); GEURTS, Wout P., 5807 EE Oostrum (NL)
(74) Representative: Janssen, Paulus J. P.

(57) **Abstract**

The present invention pertains to a self-propelled vehicle for crossing land, the vehicle comprising a main engine for generating power to drive wheels of the vehicle and a gearbox for altering the speed at which the land is crossed, wherein the main engine transfers it power to an input unit of the gearbox via a clutch mechanism, the clutch mechanism being actuable to interrupt the transfer of power from the engine to the gearbox, wherein the vehicle is provided with an auxiliary engine that is operatively connected to the gearbox, which auxiliary engine is configured to transfer its power to the gearbox while the clutch is actuated and interrupts the transfer of power from the main engine to the gearbox.

## Description

### GENERAL FIELD OF THE INVENTION

The present invention pertains to a self-propelled vehicle for crossing land (i.e. a road, soil, grass, sand, rock etc), such as a truck, or any other vehicle for crossing land on roads or off-road, the vehicle comprising a main engine for generating power to drive wheels of the vehicle and a gear box for altering the speed at which the land is crossed, wherein the main engine transfers it power to an input unit of the gearbox via a clutch mechanism, the clutch mechanism being actuable to interrupt the transfer of power from the main engine to the gearbox. The configuration of a main engine coupled to gearbox via a clutch mechanism is a standard configuration for most vehicles. Additionally, in particular for vehicles wherein more than one set of wheels is driven, a transfer box is present to selectively or continuously drive a second or further set of wheels.

### BACKGROUND OF THE INVENTION

Self-propelled vehicles to cross land are common, and commonly have the above identified configuration of a main engine, gearbox an intermediate clutch, whether being command shifted or automatically shifted from one gear to another. Switching gears alters the speed at which the vehicle can be run as well as the torque on the driven wheels. Gearboxes are typically designed to enable a large speed range withing the capacity of the main engine. In particular for trucks that are designed to cross land, the combination of engine and gearbox is typically designed to enable a speed range between 5 km/h as the lowest possible speed at which the engine still runs reliably, and about 120 km/h as the highest possible speed. Although a gearbox could potentially be designed for even larger ranges, optionally also by increasing smoothness of the engine (i.e. by increasing the range at which the internal speed of the engine can be used reliably), this increases the costs of the gearbox significantly and thus is economically not viable. In particular for trucks, standard gearboxes are used for a complete range of trucks, typically enabling reliable driving at speeds between 5 and 100 km/h.

However, for some applications it may be needed that the vehicle is ran at considerably lower speeds such as 1-3 km/h. This may for example be necessary for garbage trucks, where operators walk the streets and fetch garbage containers or bags, or for truck that are used for collecting crop that is harvested by hand, or at least involving a human operator. Since it is not economical to use a special engine or gearbox for such trucks, such trucks are typically provided with an auxiliary engine that is able to drive an axle/wheels that are not driven by the normal engine/gearbox configuration. Such systems are for example known from EP 1886861 and US 3918456, and are commercially available as AddiDrive^{™} from Poclain Hydraulics, Verberie, France, or HydroDrive^{™} from M.A.N. Truck and Bus SE, Munich, Germany. Although adequate, these systems are expensive to built onto an existing truck configuration.

### OBJECT OF THE INVENTION

It is an object of the invention to provide an alternative system that allows vehicle to be drive at lower speeds than the standard configuration of main engine and gearbox allows, in particular a system that is less expensive that the existing AddiDrive^{™} and HydroDrive^{™}, and preferably allowing even more freedom to operate the vehicle.

### SUMMARY OF THE INVENTION

In order to meet the object of the invention, a self-propelled vehicle for crossing land as identified here above has been designed, wherein the vehicle is provided with an auxiliary engine that is operatively connected to the gearbox, which auxiliary engine is configured to transfer its power to the gearbox while the clutch is actuated and interrupts the transfer of power from the main engine to the gearbox.

The inventors realised that the existing systems are expensive i.a. since they require in fact a complete alternative for the main drive train, i.e. the main engine, clutch and gearbox. They additionally realised that advantageously the existing gearbox can be used for lowering speeds, that is when the engine is interrupted from transferring its power to the gearbox. This way, more freedom to operate the existing gearbox is created. Advantageously, the required means to interrupt the transfer of power from the main engine to the gearbox is present in any standard configuration, viz. the clutch mechanism. The essential feature to add in the new configuration is an auxiliary engine that is configured to transfer its power to the gearbox instead of the main engine, however, at a level that corresponds to a speed outside of the range that is obtainable when using the main engine, in particular at a lower speed. So the existing gearbox, with all of its existing functionality, is simply directly driven by the (typically relatively small) auxiliary engine, while the main engine is mechanically separated from the gearbox by actuating the clutch, with the main aim to be able and drive the gearbox at lower speeds as the original main engine/gearbox set up would allow due to the engine specifications. This configuration is not only less expensive to build, since there needs to be no alternative for the existing gearbox, also the functionality is improved since the complete functionality of the gearbox can still be used, even when driving the vehicle via the auxiliary engine.

Although this means that the gearbox is driven at lower speeds as intended, and also, the clutch has to be continuously actuated as long as the auxiliary engine drives the gearbox, it was surprisingly found that this poses no problems for existing commercially available gearboxes and clutches. A potential lesser lubrication of the internals of the gearbox is either compensated by lesser lubrication requirements due to the lower speeds, or can be compensated for by using a somewhat higher lubricant level in the gearbox. Although not particularly designed for this, contemporary clutch mechanisms can easily withstand continuous actuation.

The invention is also embodied in a method of driving a self-propelled vehicle, which vehicle comprises a main engine for generating power to drive wheels of the vehicle and a gearbox for altering the speed at which the land is crossed, wherein the main engine transfers it power to an input unit of the gearbox via a clutch mechanism such that the vehicle can have a cruising speed between a minimum speed and a maximum speed when using the main engine to propel the vehicle, the vehicle further comprising an auxiliary engine that is operatively connected to the gearbox, the method comprising driving the vehicle across a piece of land below the said minimum speed by actuating the clutch mechanism to interrupt the transfer of power from the main engine to the gearbox, and using the auxiliary engine to transfer its power to the gearbox to drive the vehicle.

### FURTHER EMBODIMENTS OF THE INVENTION

In a first further embodiment of the self-propelled vehicle as identified here above, in which embodiment the gear box is provided with an output unit for transferring power to a unit distal of the gearbox, the auxiliary engine transfers its power to the gearbox via the output unit. It was recognised by the inventors that in principle, each gearbox is provided with an output unit, such as for example an output shaft, for transferring power to a distal unit. This unit could be an axles with wheels, but the type of unit to be driven is not essential to this embodiment. What is key is the recognition that the output unit can in principle be used as a power input unit to drive the gearbox as well: all required mechanical connections are simply there. For example, an output shaft of the gearbox can be used to connect the auxiliary engine to. This way, the auxiliary engine can drive the gearbox, which can be used as normal, although at a speed that now matches the auxiliary engine.

In yet a further embodiment of the above self-propelled vehicle, the gearbox is provided with a main output unit for transferring power to the wheels of the vehicle, which is a standard configuration, and additionally, the gearbox is provided with an auxiliary output unit to which the auxiliary engine transfers its power. Such auxiliary output units are common on gearboxes and are typically used for driving an auxiliary unit distal of the gearbox other than the wheels of the vehicle, such as for example a generator, lift, separate processing machine etc. Since such auxiliary output units are common on gearboxes anyway, and since they inherently are configured to have an operable connection with the gears of the gearbox, such output unit can be advantageously used as a power input unit. This has the additional advantage over using for example the standard output shaft, that the accessibility is significantly better than that of the main output shaft since an auxiliary output unit, in contrast to the main output shaft, is designed for coupling to an auxiliary unit and thus must be freely accessible.

In again a further embodiment of the above self-propelled vehicle, the auxiliary output unit is a so-called Power Take-Off (PTO) unit. As is commonly known, a Power take-off unit is a unit that is able to transfer power from a power source, such as a running engine, and transmitting it to an application such as an attached implement or separate machine. A PTO allows the hosting energy source to transmit power to additional equipment that does not have its own engine or motor. For example, a PTO helps to run a jackhammer using a tractor engine. It was applicant's recognition that such a PTO can also be used to drive the gearbox instead of transferring power from the gearbox to an external unit.

In another embodiment of the above self-propelled vehicle the auxiliary engine is chosen from the group of electric engine, combustion engine and hydraulic engine, preferably a hydraulic engine. Hydraulic engines are relatively inexpensive, powerful and easy to drive using a simple hydraulic line from a hydraulic system which is present on almost any contemporary vehicle. Preferably the hydraulic engine is driven by the main engine of the vehicle. This way, an separate power supplying engine can be dispensed with a simple hydraulic pump can be used as the hydraulic engine.

Yet further, in an embodiment wherein the main engine comprises a Power Take-Off unit, the main engine of the vehicle drives the hydraulic engine by means of a hydraulic pump that is operatively connected to the PTO unit of the main engine. This makes the overall auxiliary system very powerful, yet simple, easy to install, inexpensive and with a high freedom to operate since the functionality of the gearbox is in principle available also when the auxiliary engine propels the vehicle.

In another embodiment of the above self-propelled vehicle the vehicle comprises a means to automatically actuate the clutch while the auxiliary engine transfers power to the gearbox. This could be as simple as a switch, either controlled manually or automatically, the latter for example by programming a central processing unit that controls the actuation of the clutch as well as the auxiliary engine.

The above described embodiments each also pertain to the method of the invention as described here above.

The invention will now be illustrated using the following example.

### EXAMPLE

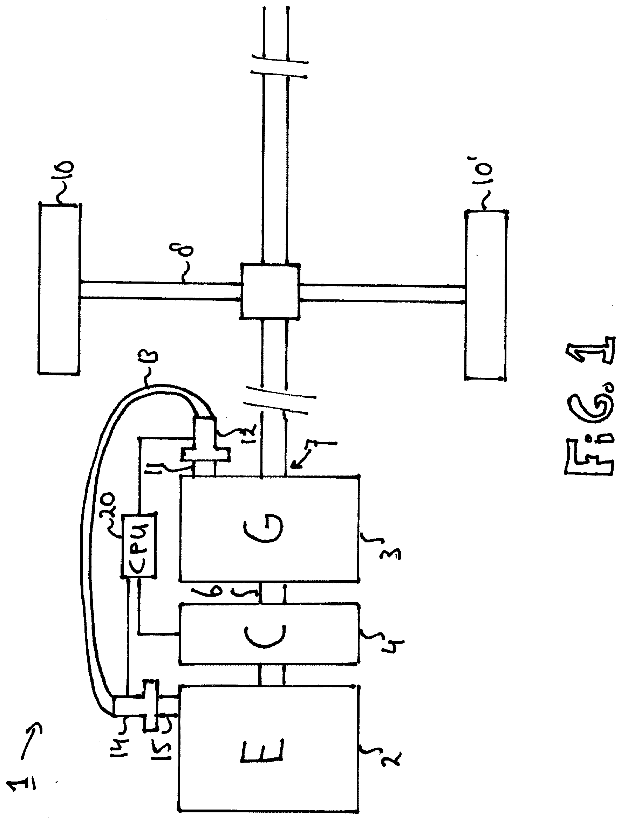

Figure 1 schematically represent the drive train of a self-propelled vehicle.

### Figure 1

Figure 1 schematically represent the drive train 1 of a self-propelled vehicle, the remainder of the vehicle (chassis, non-driven wheels, cabin etc.) not being depicted. The drive train 1 comprises a main engine 2 ("E"), in this case a diesel engine, a gearbox 3 ("G") which are operatively connected via a clutch mechanism 4 ("C"). In this common concept, the main engine 2 is configured to transfers it power to an input unit 6 of the gearbox 3 via the clutch mechanism 4. The clutch mechanism 4 being actuable to interrupt the transfer of power from the engine to the gearbox, for example to enable smooth gear shifting or to halt the vehicle while the engine is running. The power of the main engine is transferred via the gearbox to the output unit 7 of the gearbox, which is coupled to an axle 8 to enable driving the wheels 10 and 10'. This is all common knowledge, as is the presence of a PTO unit 11 on the gearbox to drive for example a lift, pump, jack hammer, generator etc.

In the concept of the invention, also the main engine is provided with a PTO 15. The PTO of the main engine drives a hydraulic pump 14, which is connected via hydraulic line 13 to hydraulic engine 12. This way, the main engine is able to drive the auxiliary engine 12 that is able to transfer its power to the gearbox and therewith to output unit 7 of this gearbox. In that case the clutch 4 is actuated and thereby interrupts the transfer of power from the main engine to the gearbox. The actuation of the clutch, the pump 14 and auxiliary engine 12 are controlled by CPU 20. This way, the vehicle can de driven using the auxiliary engine, which on its turn is driven by the main engine, to cross land at a very low speed. The functionality of the gearbox is the same as the functionality when using PTO 11 as a true power take-off unit instead of a power take-in unit in line with the present invention.

In an embodiment the pump 14 on the main engine has a fixed pumping action, thus not controlled via CPU 20. This could be advantageous when under all circumstances only one particular low speed is used.

## Claims

1. A self-propelled vehicle for crossing land, the vehicle comprising a main engine for generating power to drive wheels of the vehicle and a gearbox for altering the speed at which the land is crossed, wherein the main engine transfers it power to an input unit of the gearbox via a clutch mechanism, the clutch mechanism being actuable to interrupt the transfer of power from the main engine to the gearbox, **characterised in that** the vehicle is provided with an auxiliary engine that is operatively connected to the gearbox, which auxiliary engine is configured to transfer its power to the gearbox while the clutch is actuated and thereby interrupts the transfer of power from the main engine to the gearbox.

2. A self-propelled vehicle according to claim 1, wherein the gearbox is provided with an output unit for transferring power to a unit distal of the gearbox, **characterised in that** the auxiliary engine transfers its power to the gearbox via the output unit.

3. A self-propelled vehicle according to claim 2, wherein the gearbox is provided with a main output unit for transferring power to the wheels of the vehicle, **characterised in that** the output unit to which the auxiliary engine transfers its power is an auxiliary output unit of the gearbox suitable for driving an auxiliary unit distal of the gearbox other than the wheels of the vehicle.

4. A self-propelled vehicle according to claim 3, **characterised in that** the auxiliary output unit is a Power Take-Off (PTO) unit.

5. A self-propelled vehicle according to any of the preceding claims, **characterised in that** the auxiliary engine is chosen from the group of electric engine, combustion engine and hydraulic engine.

6. A self-propelled vehicle according to any of the preceding claims, **characterised in that** the auxiliary engine is a hydraulic engine.

7. A self-propelled vehicle according to claim 6, **characterised in that** the hydraulic engine is driven by the main engine of the vehicle.

8. A self-propelled vehicle according to claim 7, wherein the main engine comprises a Power Take-Off unit, **characterised in that** the main engine of the vehicle drives the hydraulic engine by means of a hydraulic pump that is operatively connected to the PTO unit of the main engine.

9. A self-propelled vehicle according to any of the preceding claims, **characterised in that** the vehicle comprises a means to automatically actuate the clutch while the auxiliary engine transfers power to the gearbox.

10. A method of driving a self-propelled vehicle, which vehicle comprises a main engine for generating power to drive wheels of the vehicle and a gearbox for altering the speed at which the land is crossed, wherein the main engine transfers it power to an input unit of the gearbox via a clutch mechanism such that the vehicle can have a cruising speed between a minimum speed and a maximum speed when using the main engine to propel the vehicle, the vehicle further comprising an auxiliary engine that is operatively connected to the gearbox, the method comprising driving the vehicle across a piece of land below the said minimum speed by actuating the clutch mechanism to interrupt the transfer of power from the main engine to the gearbox, and using the auxiliary engine to transfer its power to the gearbox to drive the vehicle.
